# EUROPEAN PATENT APPLICATION

(11) **EP 2 202 526 A2**
(43) Date of publication of application: **30.06.2010**
(21) Application number: 09015875.9
(22) Date of filing: 22.12.2009
(51) Int. Cl.: G01P 15/12

(54) **Mems sensor and mems sensor manufacture method**

(30) Priority: 26.12.2008 JP 2008334018
(71) Applicant: Yamaha Corporation, Hamamatsu-shi, Shizuoka-ken (JP)
(72) Inventor: Hattori, Atsuo, Hamamatsu-shi Shizuoka-ken (JP)
(74) Representative: Emde, Eric

(57) **Abstract**

Trench separating mass body and support is defined in support substrate, and flexible beam cross is defined in semiconductor layer, in SOI. The semiconductor layer and intermediate insulator of the SOI are etched in crossed region of the flexible beam cross and in a looped region above the support body. Connector layer is buried in the etched recesses. The semiconductor layer is patterned into the flexible beam cross above the mass body. The trench is etched in the support substrate exposing the intermediate insulator, which is then etched to form a gap between the mass body and flexible beam cross. The connector layer in the crossed region couples the mass body and flexible beam cross, and the connector layer outside the flexible beam cross couples the flexible beam cross and support body. Stopper is formed by extending the connector layer, or leaving the semiconductor layer, above the mass body corners.

## Description

### FIELD

The embodiments discussed herein are related to a micro electro-mechanical system (MEMS) sensor and a MEMS sensor manufacture method.

### BACKGROUND

A MEMS sensor such as an acceleration sensor, a vibration gyroscope and a vibration sensor is known which converts a displacement of flexible beam coupling a mass body to an electric signal. Silicon fabrication techniques have been developed sophisticatedly along with the advancement of integrated circuits, and are suitable for MEMS manufacture. Charge carriers (electrons, holes) in silicon are under influence of stress application. Mobility of electrons increases as a tensile stress is applied along a transport direction, and decreases as a compressive stress is applied along a transport direction. Mobility of holes increases as a compressive stress is applied along transport direction, and decreases as a tensile stress is applied along transport direction. If the surface of a semiconductor layer is deformed in a convex shape, the surface receives a tensile stress, whereas if the surface is deformed in a concave shape, it receives a compressive stress. Change in the mobility of charge carriers in semiconductor can be detected by fabricating a semiconductor element such as a resistor and a MOS transistor in a silicon region intensively receiving stress. Mass body is coupled to a flexible beam unit whose distal ends are supported by support body. Since the mass body has inertia, as the mass body moves, the flexible beam deforms and receives stress. As a cross sectional area of the beam is made small, stress applied on the beam becomes large.

Assuming xyz orthogonal coordinate system, for example, two flexible beams along x-direction and two flexible beams along y-direction are connected via a joint region to form a flexible beam unit of cross shape, mass body is coupled to the lower surface of the crossed region, and four distal ends are supported by support body. This structure is that the mass body is supported by the support body via two flexible beams in x-direction and two flexible beams in y-direction. As the support body starts moving along the x-direction, the upper region of the mass body is driven along the x-direction so that the mass body tilts along the x-direction and two flexible beams along the x-direction undergo deflection. Deformations of two flexible beams along the x-direction are opposite (concave and convex) in the z-direction and change depending on distance from the joint region. When a bridge circuit is formed by forming four piezo resistors disposed on the flexible beams along the x-direction, acceleration along the x-direction can be detected. When a bridge circuit is formed by forming four piezo resistors disposed on the flexible beams along the y-direction, acceleration along the y-direction can be detected. Motion along the z-direction causes symmetrical deformation of respective flexible beams on both sides of the joint region. Deformation becomes opposite in sign between motion along + z-direction and - z-direction. When a bridge circuit is formed by forming four piezo resistors on the flexible beams along the x-direction and/or along the y-direction, acceleration along the z-direction can be detected.

Silicon on insulator (SOI) substrate has usually the structure that a single crystal silicon semiconductor layer is bonded via a silicon oxide insulating layer to a single crystal silicon support substrate. One method of forming the SOI substrate is to abut two silicon substrates each having a silicon oxide layer, with the silicon oxide layers being faced each other, to perform high temperature annealing to bond two substrates, and to polish one of the silicon substrate to a desired thickness to provide a semiconductor layer. Another known method is to implant oxygen ions into a silicon substrate, and to form a buried silicon oxide layer through heat treatment. In this case, the buried silicon oxide layer does not have a bonding function, and is merely an intermediate insulating layer. The SOI substrate is used for forming dielectrically isolated high speed transistors or forming MEMS.

Japanese Patent Unexamined Publication No. 8-274349 discloses that an n-type epitaxial layer is grown on a p-type silicon substrate, piezo resistors are formed by p-type regions formed by doping boron (B) into the n-type epitaxial layer, a hollow or cavity is formed through the substrate and epitaxial layer by etching, a flexible beam unit is formed from the epitaxial layer and traversing the hollow, and a weight formed of metal is attached on the lower surface of the central area of the beam.
Japanese Patent Unexamined Publication No. 8-248061 discloses a MEMS sensor formed by bonding beam and weight respectively made from different silicon substrates.

Japanese Patent Unexamined Publication No. 9-15257 discloses that a looped recess is formed on the surface of a first substrate, a second substrate is bonded to the first substrate, the second substrate is thinned, thereafter a weight is formed by the first substrate, and a beam is formed from the second substrate.
Japanese Patent Unexamined Publication No. 2003-270262 discloses that a weight is coupled via a beam to a frame, a glass stopper facing the weight for limiting a movable range of the weight is coupled to the frame, and adhesion preventive portion is formed on at least one of opposing surfaces of the weight and glass stopper.

Japanese Patent Unexamined Publication No. 2004-233072 and USP 6,892,578 disclose that a plurality of recesses are formed on the surface of an acceleration sensor, and a regulating plate is bonded to the recesses using spacers having a diameter larger than a depth of the recesses to thereby define a narrow gap between a weight and the regulating plate.
Japanese Patent Unexamined Publication No. 2006-208272 discloses a structure in which a sensor is formed by an SOI substrate, wherein a main weight supported via a beam by a frame has additional weights continuous to and integral with the main weight at four corners thereof, and a cover covering the upper portion of the sensor has stoppers facing the additional weights.

Japanese Patent Unexamined Publication No. 2006-153519 discloses a structure in which a flat plate stopper for regulating a displacement of a weight is provided above the surface of an acceleration sensor, a plurality of convex portions with a preset projection height are bonded to a frame, and a recess portion for storing adhesive is formed in each convex portion. The acceleration sensor is formed by an SOI substrate having an insulating film and a semiconductor layer formed on a support substrate, a frame and a core portion of a weight are formed of the support substrate, insulating layer and an active layer, a flexible beam unit is formed of the active layer, and additional portions continuous to the core portion at four corners are formed of the support substrate.

Japanese Patent Unexamined Publication No. 2006-64532 discloses a structure in which a main weight supported via a beam to a frame has additional weights continuous to and integral with the main weight at four corners, a thin stopper for regulating a displacement of each additional weight protrudes from each corner of the frame, and is provided with a reinforcing portion.

### SUMMARY

An object of the present invention is to provide a MEMS sensor having a novel structure and its manufacture method.
Another object of the present invention is to provide a MEMS sensor equipped with a mass body stopper integral with the MEMS sensor and its manufacture method.
According to one aspect of the present invention, there is provided a MEMS sensor including:
a mass body;
a support body surrounding and separated from said mass body by a looped trench, the support body and the mass body being formed from a common substrate;
flexible beam having piezo resistors and formed by a semiconductor layer separated upward from an upper surface of said substrate by a first distance;
first connector extending through a central region of said flexible beam and reaching said mass body, said first connector mechanically coupling said flexible beam and said mass body; and
second connector contacting distal ends of said flexible beam, extending through said semiconductor layer, and reaching said support body, said second connector mechanically coupling said flexible beam and said support body.

According to another aspect of the present invention, there is provided a method for manufacturing a MEMS sensor comprising steps of:
defining a region for a mass body, a region for a trench surrounding said mass body and a region for a support body outside said trench region, on a lamination substrate laminating a semiconductor layer above a substrate via an intermediate layer having etching characteristics different from etching characteristics of said semiconductor layer and said substrate;
etching said semiconductor layer and said intermediate layer in a region of a central area of said mass body region and in a looped region above said support body region to form recesses exposing said substrate;
burying a support material layer having different etching characteristics from those of said intermediate layer, in said recesses;
etching said semiconductor layer to pattern cross-shaped flexible beam unit including said region of the central area in a crossed region, above said mass body region;
etching said trench region of said substrate to form a trench exposing said intermediate layer; and
wet etching said intermediate layer
The object and advantages of the invention will be realized and attained by means of the elements and combinations particularly pointed out in the claims.
It is to be understood that both the foregoing general description and the following detailed description are exemplary and explanatory and are not restrictive of the invention, as claimed.

### BRIEF DESCRIPTION OF DRAWINGS

Figs. 1A to 1H are cross sectional views and plan views illustrating an acceleration sensor according to a first embodiment.
Fig. 2A to 2L are cross sectional views and plan views illustrating processes for manufacturing the acceleration sensor of the first embodiment.
Figs. 3A to 3K are cross sectional views and plan views illustrating acceleration sensors according modifications of the first embodiment.
Figs. 4A and 4B are a plan view and a cross sectional view illustrating an acceleration sensor according to a second embodiment.

### DESCRIPTION OF EMBODIMENTS

The present inventor has studied for an acceleration sensor having a mass body and a support body patterned from a support substrate of an SOI substrate and a flexible beam unit patterned from a semiconductor layer of the SOI. In this case, the support substrate may be called a lower substrate because of its positive function, and the semiconductor layer may be called an upper semiconductor layer. A looped trench is formed through the lower substrate, a central region is used as a mass body, and a peripheral region is used as a support body. The upper semiconductor layer is patterned to form a flexible beam unit coupling the mass body and having piezo resistors for detecting strain caused by stress.

The mass body and flexible beam unit are overlapped as viewed in plan. In order to separate the mass body from the flexible beam unit except for the coupling region, etched is an intermediate insulating layer between the upper semiconductor layer and lower substrate. The mass body is however required to be coupled to the flexible beam unit. The distal ends of the flexible beam unit are required to be supported by the support body. Connectors are formed between the flexible beam unit and mass body and between the support body and flexible beam unit. The connectors are made of support material having etching characteristics different from those of the intermediate insulating layer. The upper semiconductor layer and intermediate insulating layer in the connector regions are etched, and a support material layer is buried in the etched recesses. When the support material layer or upper semiconductor layer is configured to extend or protrude above the mass body, this extension can function as stopper for rising motion of the mass body.

### First Embodiment

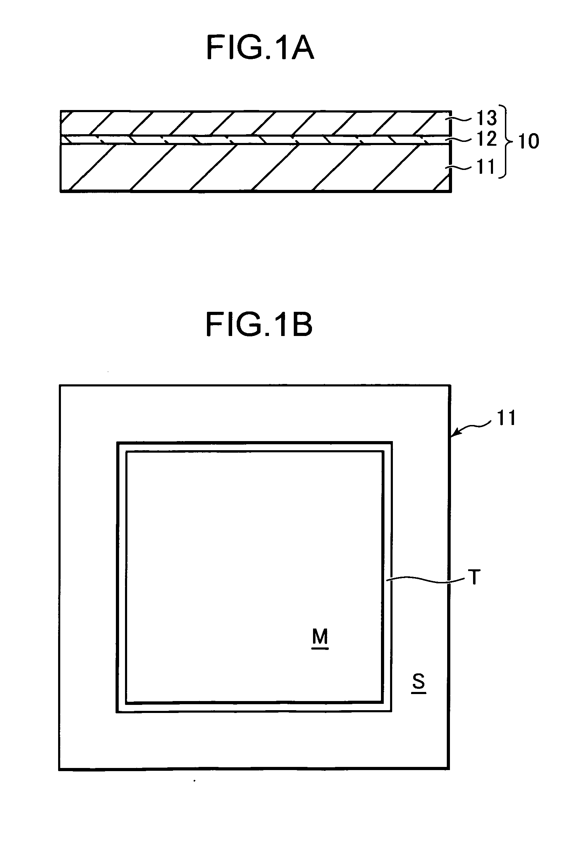

With reference to Figs. 1A to 1H, description will be made on structure of an acceleration sensor according to the first embodiment.
As illustrated in Fig. 1A, an SOI substrate 10 has the structure that, for example, a single crystal silicon lower substrate 11 having a physical support function and a single crystal silicon upper semiconductor layer 13 having a predetermined thickness are bonded by an intermediate insulating layer 12 of silicon oxide or the like. The lower substrate 11 has a usual thickness of a silicon substrate, in a range of 400 to 800 µm, e.g. 625 µm. The upper silicon layer 13 has a thickness in a range of 3 to 20 µm, e.g. 10 µm, in order to be separated from the lower substrate and function as flexible beam. The intermediate insulating layer 12 has a thickness in a range of 0.2 to 2 µm, e.g. 1 µm, in order to regulate an upper displacement of the mass body. In actual processes, a number of acceleration sensors are formed on one SOI wafer and separated into each acceleration sensor by scribing or the like. In the following, one chip will be described by way of example. The size of one chip is, for example, about 2500 µm x 2500 µm.

As illustrated in Fig. 1B, a trench T having a looped shape, e.g. a rectangular shape, is defined extending through the whole thickness of the lower substrate 11. The trench T is etched at a later process to separate the lower substrate into the mass body M inside the trench T and the support body S outside the trench T. Although the looped shape is not limited to a rectangular shape, the rectangular shape improves area utilization ratio. It is also possible to improve impact durability by truncating the corners of a rectangle, by rounding the corners or the like. These shapes are fundamentally called also a rectangular shape. If a narrow trench is formed, it is also possible that the support body regulates displacement of the mass body along the in-plane directions.

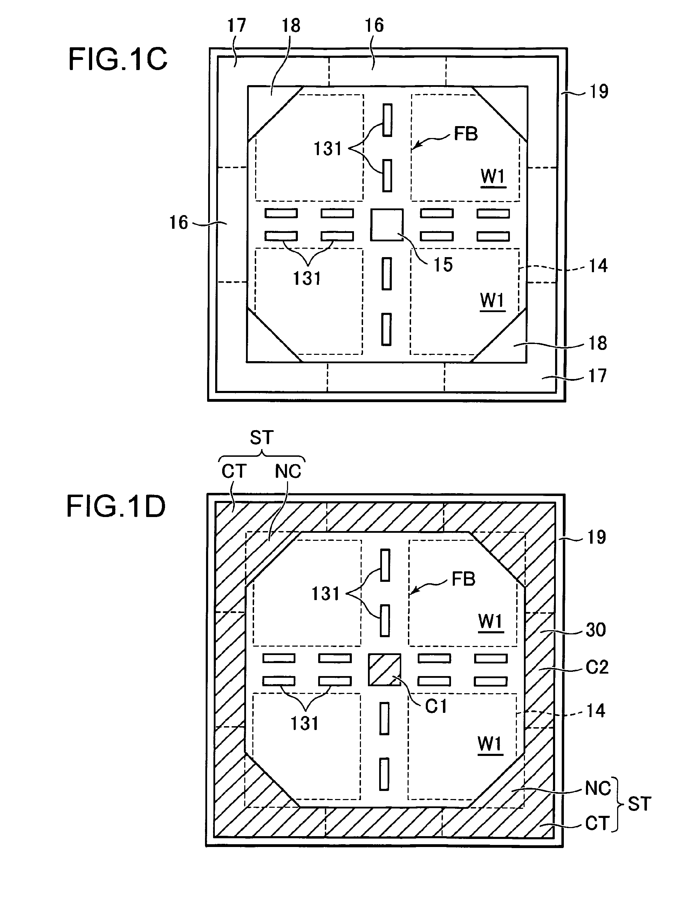

As illustrated in Fig. 1C, flexible beam unit FB of a cross shape is defined in the plane of the upper semiconductor layer 13 by four window regions W1. Four beams extending from a joint region (crossed region of the cross) along ± x-directions and ± γ-directions have each a width of, e.g. about 350 µm, and a length of, e.g. about 750 µm. The size of the crossed region becomes about 350 µm x 350 µm. Piezo resistors 131 are formed in each beam FB by impurity implantation or the like, the piezo resistor having a width of, e.g. about 8 µm, and a length of, e.g. about 100 µm. Connector for coupling the mass body M to the flexible beam unit FB is formed in the crossed region of the flexible beam unit, and connector for supporting the flexible beam unit FB and coupling the flexible beam unit FB to the support body S is formed on the distal ends of the four beams. Stopper for regulating rising motion of the mass body M is formed above the corners of the mass body M.

In a rectangular region 15 within the crossed region of the flexible beam unit FB and regions 16 contiguous with the distal ends of the flexible beam unit FB, the upper semiconductor layer 13 and intermediate insulating layer 12 are etched, and a support material layer is buried in the etched regions to form the two kinds of connectors. Rise stopper for the mass body M can be formed in the following manner. In regions 17 outside the corners of the mass body M (on the support body S), the upper semiconductor layer 13 and intermediate insulating layer 12 are etched, and in regions 18 extending in a triangular shape above the corners of the mass body from the inner edges of the regions 17, the upper semiconductor layer 13 is etched without etching the intermediate insulating layer 12. The support material layer is thereafter buried in the etched regions. The support material layer contacts the lower substrate in the regions 17, and is separated from the lower substrate in the region 18. For example, the rectangular region 15 has a square shape of 200 µm x 200 µm, and the region 18 has an isosceles right triangle shape having two sides of 350 µm forming a right angle.

In this embodiment, although the regions 16 and 17 are contiguous to define a looped region on the support member S, these regions may be separated regions. The position where the rise stopper is disposed is not limited to the corners of the rectangular mass body M. A number of sensor chips are formed on one SOI wafer. Scribe regions between chips are preferably semiconductor regions. In order to form the scribe regions, the upper semiconductor layer 13 is left in a narrow frame region 19 along the chip outer periphery.
The upper semiconductor layer 13 in the regions 15, 16, 17 and 18 are etched to expose the intermediate insulating layer 12. Next, the intermediate insulating layer 12 exposed in the regions 15, 16 and 17 except for the region 18 is etched and removed to expose the lower substrate 11. The intermediate insulating layer 12 is left in the region 18 to form a step relative to the region 17.

As illustrated in Fig. 1D, a support material layer 30 of, e.g. silicon nitride (SiₓN_{y}), is deposited on the substrate whole surface by chemical vapor deposition (CVD), burying the recesses in the regions 15, 16, 17 and 18 formed by removing the upper semiconductor layer and intermediate insulating layer or by removing the upper semiconductor layer. When silicon oxide is etched by dilute fluoric acid or buffered fluoric acid, silicon nitride can scarcely be etched.
The film formed by CVD is conformal to the underlying topology. The support material layer at the level higher than the upper semiconductor layer is not necessary. The unnecessary region is removed by etch back, chemical mechanical polishing (CMP) or the like to expose the upper semiconductor layer 13.

The support material layer 30 buried in the region 15 constitutes a connector C1, which directly contacts and is mechanically coupled with the mass body S, and the upper region of which is mechanically coupled with the crossed region of the flexible beam unit FB. The connector C1 couples the mass body M to the flexible beam unit FB. The support material layer 30 buried in the region 16 constitutes a connector C2, which directly contacts and is mechanically coupled with the support body S, and the upper region of which is mechanically coupled with the distal end of the flexible beam unit FB. The connector C2 couples the flexible beam unit FB to the support body S. The support material layer 30 buried in the region 17 constitutes a contact region CT directly contacting and mechanically coupled with the support body S. The support material layer 30 buried in the region 18 constitutes a non-contact region isolated from the lower substrate 11 by the intermediate insulating layer 12. The non-contact region NC is contiguous with the contact region CT to constitute stopper ST. The non-contact region NC of the stopper ST forms a step to separate upward from the lower substrate 11, and extends above the mass body M. The frame region 19 of the upper semiconductor layer 13 surrounds the outer peripheries of the connectors C2 and stoppers ST.

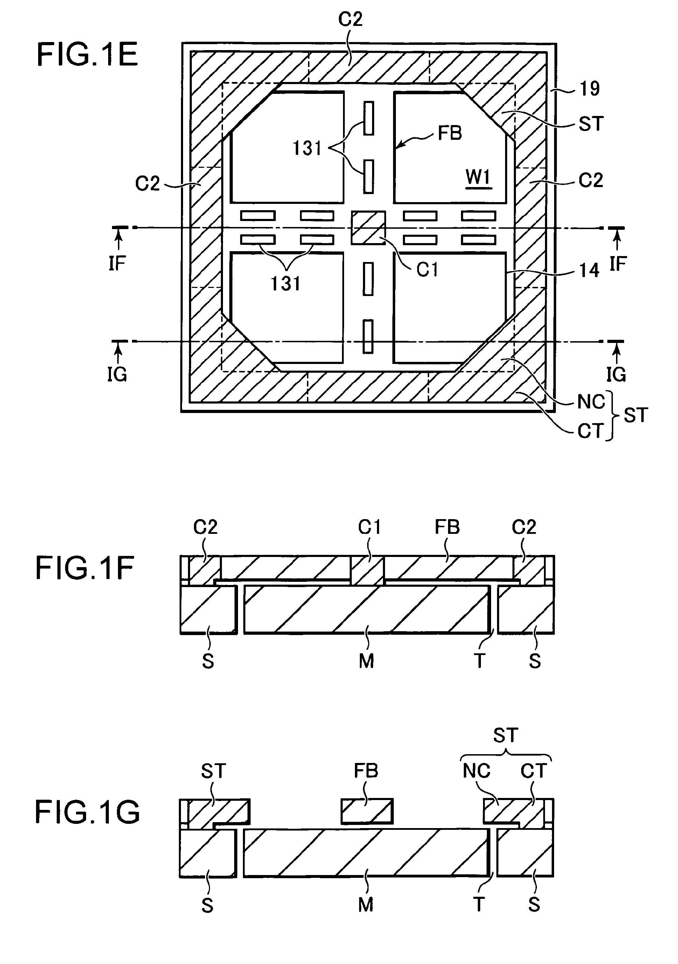

As illustrated in Fig. 1E, after the connectors C1 and C2 and stoppers ST are formed, the flexible beam unit FB is patterned. A resist pattern is formed covering the cross shaped flexible beam unit FB, connector C2, stopper ST, and the peripheral region 19, defining window regions W1. The upper semiconductor layer 13 exposed in the window regions W1 is etched and removed. The resist pattern is then removed. The narrow regions 14 continuous with and perpendicular to the distal ends of the flexible beam unit FB are left. This region is an alignment margin region and is not an essential constituent element. Thereafter, the substrate is turned upside down, and a trench T is etched through the lower substrate 11.

The intermediate insulating film 12 exposed in the trench T is wet etched, and the intermediate insulating film 12 between the flexible beam unit FB and mass body M is also etched and removed. If the intermediate insulating layer is made of silicon oxide, the intermediate insulating layer can be etched by wet etching using dilute hydrofluoric acid or buffered hydrofluoric acid. Vapor phase isotropic etching with mixed gas of anhydrous hydrofluoric acid and alcohol may also be used. The support material layer 30 of silicon nitride is hardly etched because the layer has etching characteristics different from those of the intermediate insulating layer of silicon oxide. Instead of etching the intermediate insulting layer from the trench T on the bottom surface side, the intermediate insulating layer may be etched from the top surface or from both the top and bottom surfaces, while covering the flexible beam unit with resist or the like. Since the frame region 19 is continuous with adjacent chips, the underlying intermediate insulating layer 12 will not be etched.

When the support substrate 11 illustrated in Fig. 1B is superposed upon the semiconductor layer illustrated in Fig. 1E, the connector C2 and the contact region CT of the stopper ST are disposed on the surface of the support body S. The mass body M is disposed inside the trench T, and the central region thereof is superposed upon the connector C1 in the crossed region of the flexible beam unit FB. The non-contact regions NC of triangular shape of the stopper ST overlap the corner regions of the mass body M.

Fig. 1F is a cross sectional view taken along one-dot chain line IF-IF in Fig. 1E. The connector C2 is coupled with the support body S, and the flexible beam FB is coupled with the inner side wall of the connector C2. The connector C1 is coupled with the central joint region of the flexible beam FB, and the mass body M is coupled with the bottom surface of the connector C1. The intermediate insulating layer 12 inside the connector C2 is etched and removed. The outside of the mass body M except the region coupling with the connector C1 is hollow or cavity space constituting gap which allows movement of the mass body M.

Fig. 1G is a cross sectional view taken along one-dot chain line IG-IG in Fig. 1E. The mass body M is in a state isolated from both the support body S and flexible beam unit FB. The contact region CT of the stopper ST contacts and is coupled with the support body S. The non-contact region NC of the stopper ST forms a step and extends above the support body S and mass body M. As the mass body M moves upward, the non-contact region NC of the stopper ST regulates the movable range of the mass body M.

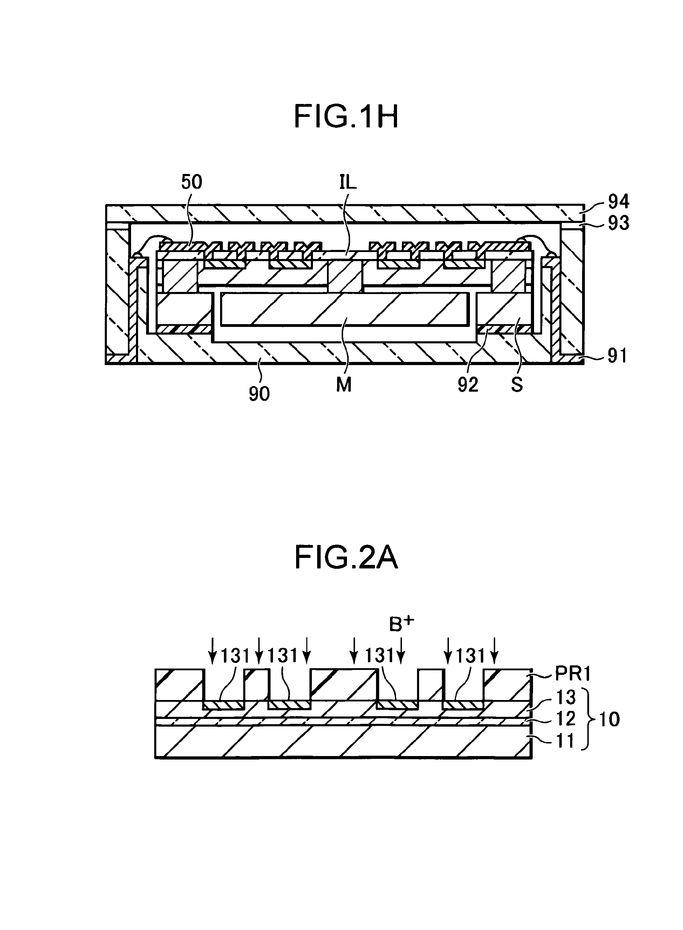

Fig. 1H illustrates an acceleration sensor accommodated in a package. The package is constituted of a box 90 and a lid 94 made of ceramics. A plurality of through leads 91 are formed through the box 90. The support body S of the acceleration sensor is fixed on the bottom surface of the box 90 with adhesive 92. A recess for accommodating the mass body M is formed in the bottom wall of the box 90, and a movable range is defined between the mass body M and the bottom surface of the box 90. The bottom surface of the box 90 constitutes a fall stopper for the mass body M. The stopper ST constitutes the rise stopper as described already. Piezo resistors of the acceleration sensor are connected to aluminum electrodes/wirings 50 via contact holes formed through the interlayer insulating layer IL. The leads 91 of the package and bonding pads of the alumina wirings 50 are connected by gold wires or the like. The lid 94 is fixed on the box 90 with adhesive 93.
Since the mass body M is supported at the upper surface by the flexible beam FB, the mass body M tilts upon application of an acceleration in the in-plane directions. Therefore, the stoppers have function of tilt (in-plane direction) stopper also.

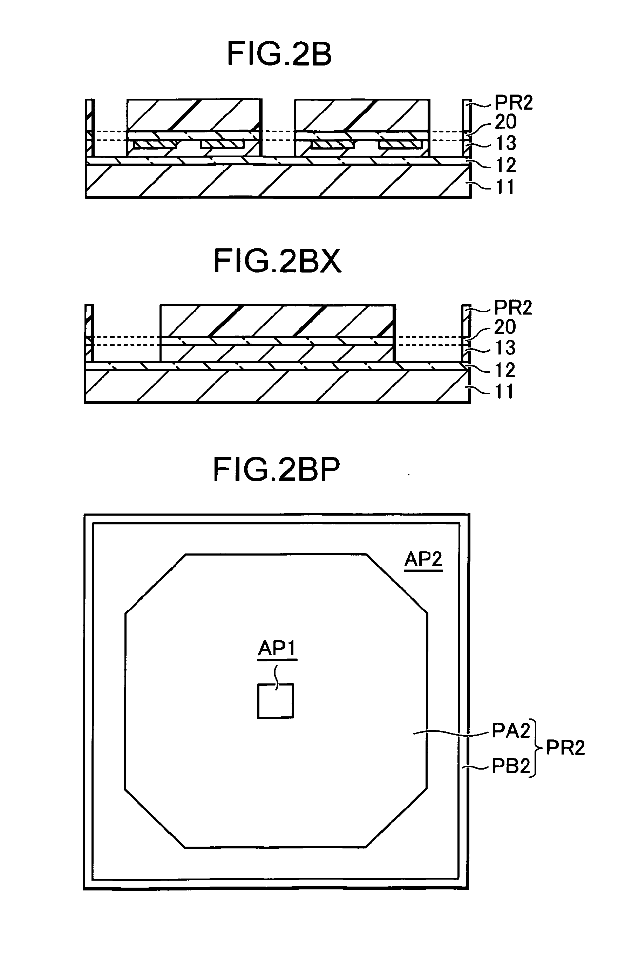

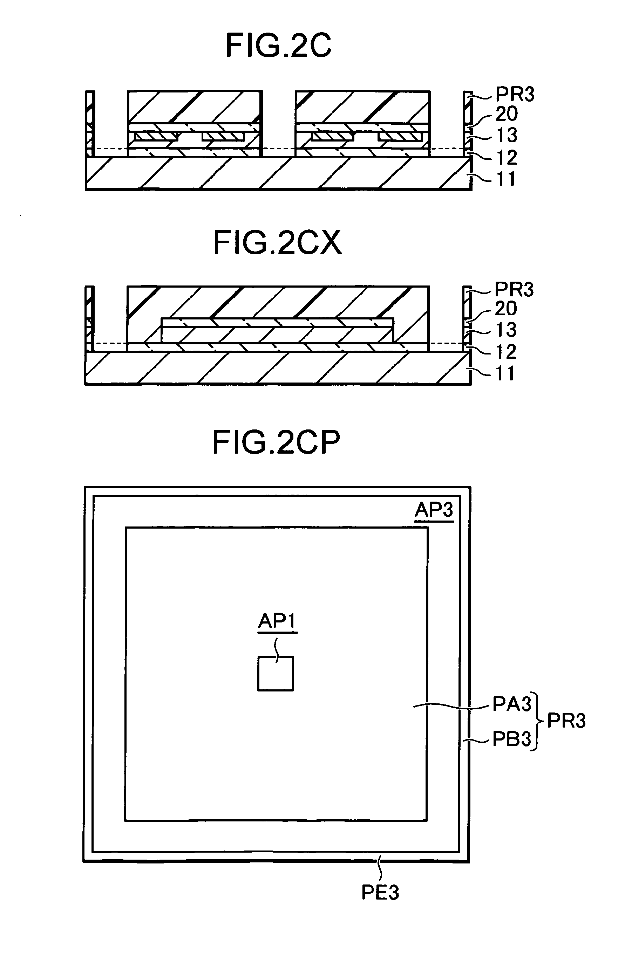

With reference to Figs. 2A to 2L, description will be made on method for manufacturing the acceleration sensor according to the first embodiment. Starting material is illustrated in Fig. 2A. The staring material is an SOI wafer including an upper semiconductor layer 13 of 10 µm thick, an intermediate insulating layer 12 of 1µm thick, and a lower substrate of 625 µm thick. Figs. 2A, 2B,... are cross sectional views along a direction of a flexible beam, and Figs. 2BX, 2CX,... are cross sectional views along a direction perpendicular to a flexible beam, including the non-contact region of the stopper.

As shown in Fig. 2A, a photoresist pattern PR1 having apertures at positions corresponding to piezo resistor regions each having a size of about 8 µm wide and about 100 µm long, is formed on the upper semiconductor layer 13 of the SOI wafer 10. By using the photoresist pattern PR1 as a mask, impurity ions are implanted to form piezo resistor regions 131. For example, p-type impurity boron (B) ions are implanted into the n-type silicon layer 13 at an impurity concentration range of 1 x 10¹⁷/cm³ to 1 x 10¹⁹/cm³,e.g., 2 x 10¹⁸/cm³. After ion implantation, the photoresist pattern PR1 is removed and then heat treatment such as rapid thermal annealing is performed to activate implanted boron ions.

As shown in Figs. 2B and 2BX, an insulating protective film 20 of about 0.5 µm thick of silicon dioxide is formed on the upper semiconductor layer 13 by thermal oxidation or CVD. Then, recesses for burying connectors and stoppers are etched. A photoresist pattern PR2 is formed on the insulating protective film 20, having apertures of a shape of the connectors and stoppers including the non-contact regions.
Fig. 2BP is a plan view illustrating the photoresist pattern PR2. The photoresist pattern PR2 has: a pattern PA2 having a rectangular aperture AP1 corresponding to the connector C1 in the central area; and a pattern PB2 surrounding the pattern PA2 and formed along a chip periphery. An aperture AP2 between the patterns PA2 and PB2 becomes a region for connectors C2 and stoppers ST. The aperture AP2 extends in triangular shape at rectangle corners to form the non-contact regions NC of the stoppers ST. This shape corresponds to the stopper ST illustrated in Fig. 1E

As illustrated in Figs. 2B and 2BX, by using as an etching mask the photoresist pattern PR2 including the patterns PA2 and PB2, the insulating protective film 20 and upper semiconductor layer 13 are sequentially and anisotropically etched by reactive ion etching (RIE). For example, the insulating protective film 20 is etched by reactive ion etching using CHF₃, and then the upper semiconductor layer 13 is etched by reactive ion etching using CF₄ gas and O₂ gas. The photoresist pattern PR2 is thereafter removed.

As illustrated in Figs. 2C and 2CX, a photoresist pattern PR3 is formed on the SOI substrate.
Fig. 2CP is a plan view illustrating the photoresist pattern PR3. The photoresist pattern PR3 has: a pattern PA3 having a rectangular aperture AP1 in the central area; and a pattern PB3 surrounding the pattern PA3 and formed along a chip periphery. An aperture AP3 between the patterns PA3 and PB3 becomes a region for the connectors C2 and contact regions CT of the stoppers ST.
As illustrated in Figs. 2C and 2CX, the intermediate insulating layer 12 exposed in the apertures is etched to expose the lower substrate 11. For example, the intermediate insulating layer 12 is etched by reactive ion etching using CHF₃ gas. In this manner, recesses for the connectors C1 and C2 and stoppers ST are formed. The connectors C2 and the contact regions CT of the stoppers ST are disposed outside the trench position where the lower substrate will be separated. The regions where the upper semiconductor layer 13 is etched, and the intermediate insulating layer 12 is left, become the non-contact regions NC of the stoppers ST The photoresist pattern PR3 is thereafter removed.

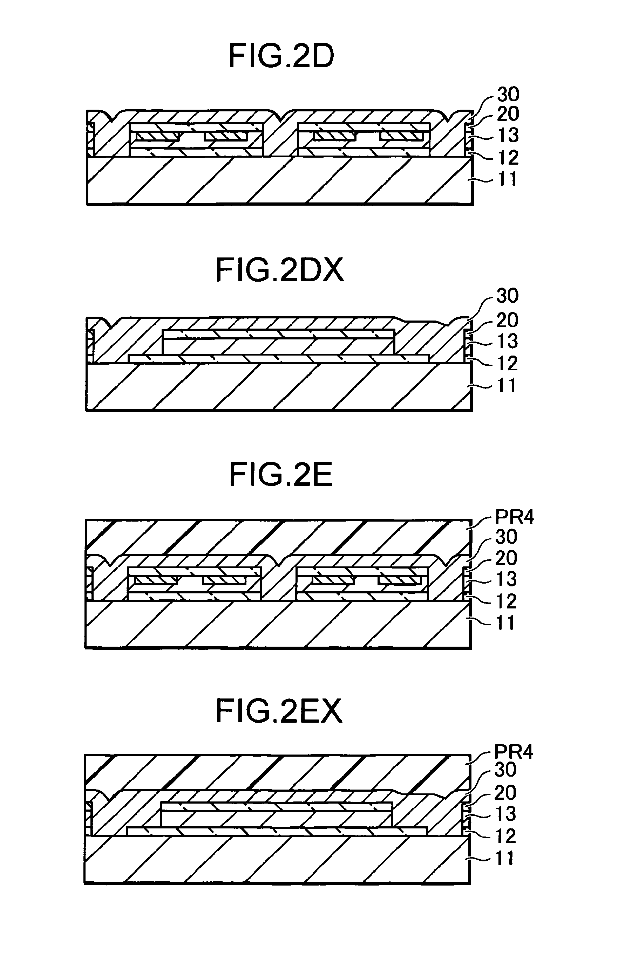

As illustrated in Figs. 2D and 2DX, a support material layer 30 is deposited burying the recesses for the connectors and stoppers. For example, a silicon nitride layer (SiₓN_{y}) layer is deposited by plasma enhanced (PE) CVD at a substrate temperature of 400 °C and to a thickness of at least 11.5 µm which is a total thickness of the intermediate insulating layer 12, upper semiconductor layer 13 and insulating protective film 20. The support material layer 30 formed by CVD or the like has conformal surface topology reflecting the underlying topology. When a layer having an uneven surface is etched back, the processed surface will also be uneven. A flat surface is desired to form wirings and the like thereon.

As illustrated in Figs. 2E and 2EX, a planarizing film PR4 is formed on the surface of the support material layer 30 if necessary. The planarizing film PR4 is made of material capable of realizing an etching rate approximately equal to that of the support material layer 30 so that it is possible to realize a flat surface. For example, photoresist, spin-on glass (SOG), polyimide or the like is coated and baked to form the planarizing film PR4 having a flat surface. The planarizing film PR4 is a film desired to be used when etch-back is to be performed, and is not an essential constituent element. Silicon nitride layer may be etched using, for example, SF₆/He.

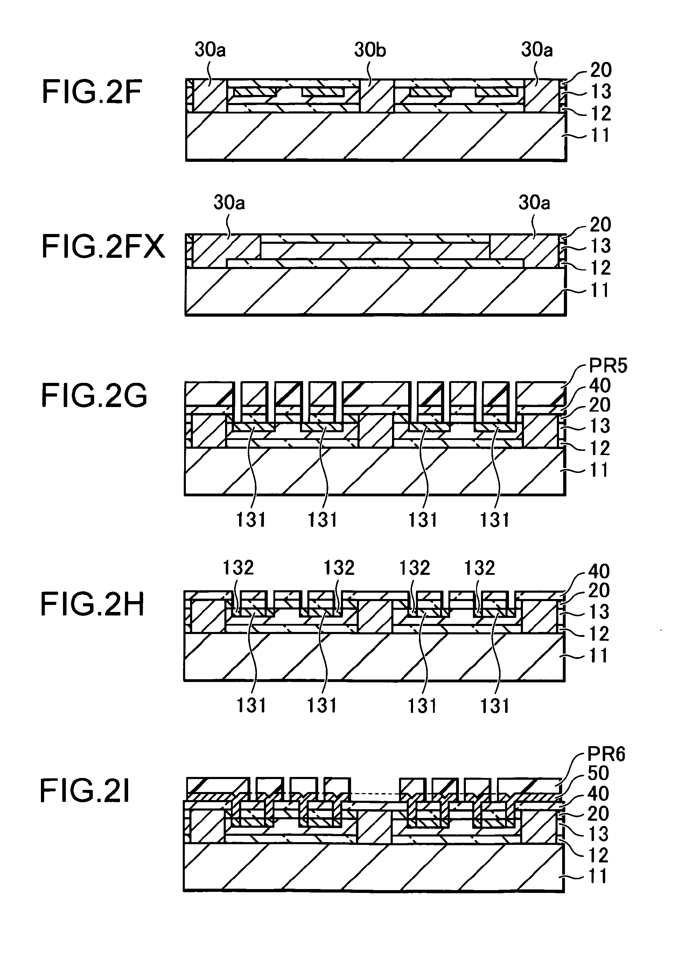

As illustrated in Fig. 2F and 2FX, the planarizing film PR4 and support material layer 30 above the surface of the insulating protective film 20 are etched back under the condition that etching rates of the planarizing film PR4 and support material layer 30 are approximately equal. As a result, the upper surfaces of the insulating protective film 20 are exposed, the support material layer 30 is left in the recesses, and the upper surface of the support material layer 30 and the upper surfaces of the insulating protective film 20 are generally flush. As a result, the flexible beam unit FB is supported by the support body S via the support material layer 30a, and the mass body M is coupled to the crossed region of the flexible beam unit FB via the support material layer 30b. However, at this stage, the flexible beam unit is not patterned yet, the mass body M is not separated yet from the support body S, and the intermediate insulating layer 12 exists between the mass body M and flexible beam unit FB.
In the state as illustrated in Figs. 2D and 2DX, where the planarizing film PR4 is not formed, polishing such as chemical mechanical polishing (CMP) may be performed to remove the support material layer 30 on the insulating protective film 20.

As illustrated in Fig. 2G, an insulating passivation layer 40 is formed on the insulating protective film 20, covering the support material layer 30. For example, the insulating passivation layer 40 is a silicon oxide (SiO₂) film of 0.5 µm thick formed by CVD. The insulating passivation layer 40 may be made of phosphor-silicate glass (PSG), boro-phospho-silicate glass (BPSG), silicon nitride SiₓN_{y} or the like. When the support material layer 30 is made of insulating material, the insulation passivation layer 40 is unnecessary.

A photoresist pattern PR5 having apertures at positions corresponding to the contact regions of the piezo resistors 131 is formed on the insulating passivation film 40. Contact holes are formed by etching the insulation passivation layer 40 and insulating protective film 20. For example, the insulating passivation layer 40 and insulation protective film 20 are anisotropically etched by reactive ion etching using mixed gas of CF₄+H₂, or CHF₃ gas. Contact holes may be formed by wet etching using dilute hydrofluoric acid (HF) or buffered hydrofluoric acid (BHF). The photoresist pattern PR5 is thereafter removed.

As illustrated in Fig. 2H, p-type impurity ions such as B are implanted to form the contact regions 132 of the piezo resistors, via the insulating passivation layer 40 and insulating protective film 20 functioning as a hard mask. Boron ions are implanted at a concentration range of 1 x 10¹⁹/cm³ to 1 x 10²¹/cm³, e.g., 2 x 10²⁰/cm³. After ion implantation, the photoresisit pattern PR5 is removed and then implanted impurity ions are activated by heat treatment.

As illustrated in Fig. 2I, a conductive layer 50 is formed on the surface of the insulating passivation layer 40. A photoresist pattern PR6 for defining electrodes and wiring patterns is formed on the conductive layer 50. By using the photoresist pattern PR6 as a mask, an unnecessary region of the conductive layer 50 is etched to pattern wirings, bonding pads and the like having predetermined shapes. For example, the conductive layer 50 may be an aluminum (Al) film of 0.3 µm thick formed by sputtering. The conductive layer 50 may be a copper film or an aluminum silicon (AlSi) film. For example, the conductive layer 50 is patterned by reactive ion etching using chlorine (Cl₂) gas. The conductive layer 50 may also be patterned by wet etching.

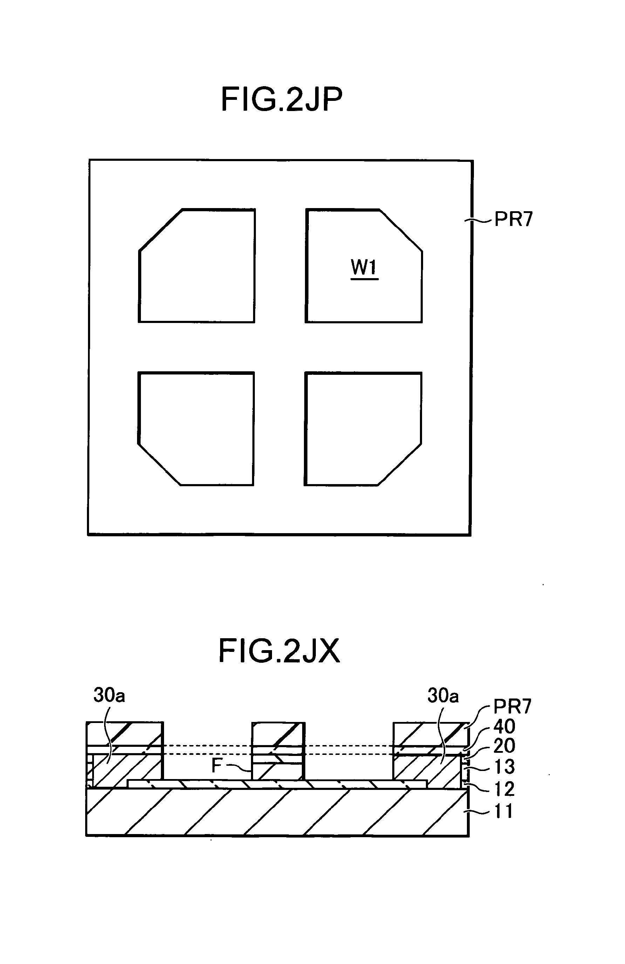

As illustrated in Fig. 2JX and 2JP, a photoresist pattern PR7 having window apertures which define flexible beam unit is formed on the insulation passivation layer 40, covering the conductive layer 50. As illustrated in Fig. 2JP, the photoresist pattern PR7 has four windows W1 for defining the shapes of the flexible beam unit FB, and covers the connectors C2 and stoppers ST in the outer peripheral portion. As illustrated in Fig. 2JX, by using the photoresist pattern PR7 as an etching mask, the insulating passivation layer 40, insulating protective film 20 and upper semiconductor layer 13 are etched. For example, the insulating passivation layer 40 and insulating protective film 20 are etched by reactive ion etching using CHF₃ gas, and the upper semiconductor layer 13 is etched by reactive ion etching using CF₄ gas and O₂ gas. The silicon oxide layers 40 and 20 may be etched by wet etching using dilute hydrofluoric acid or buffered hydrofluoric acid. The etched windows W1 define the flexible beam unit FB. The insulating passivation layer 40, insulating protective film 20 and upper semiconductor layer 13 constitute the flexible beam unit FB. The intermediate insulating layer 12 is exposed in the windows W1. The photoresist pattern PR7 is thereafter removed. At this stage, the intermediate insulating layer 12 is left.

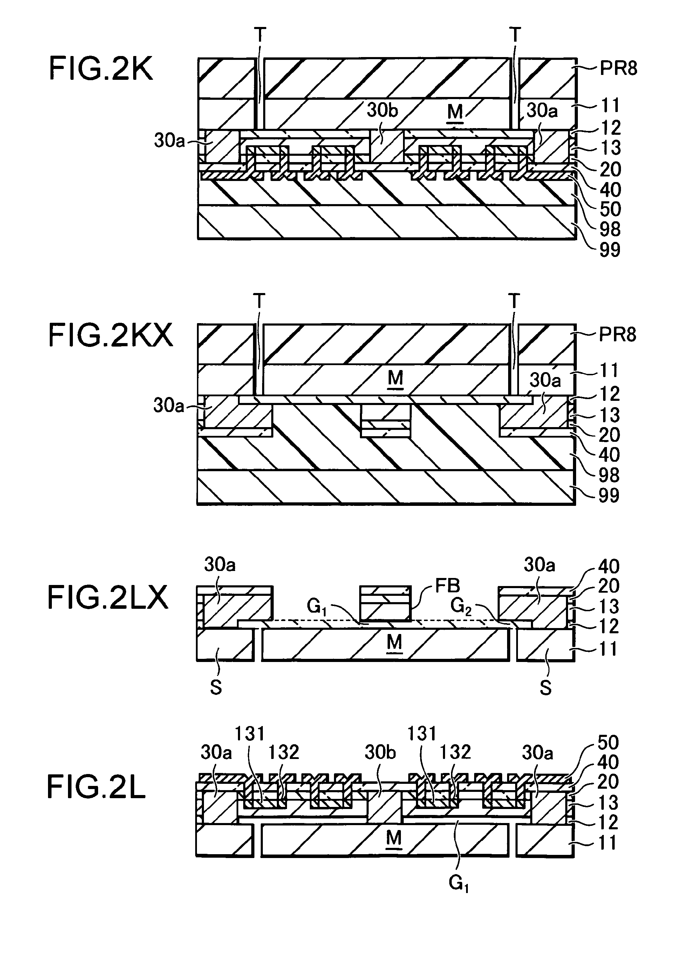

As illustrated in Figs. 2K and 2KX, a sacrificial substrate 99 is bonded via an adhesive layer 98 to the insulating passivation layer 40 formed with patterns of the conductive layer 50, and the substrate is turned upside down. More specifically, the adhesive layer 98 may use wax, photoresist, double-stick tape or the like. The sacrificial substrate 99 provides a physical support, and may be a silicon substrate.
A photoresist pattern PR8 having a looped aperture for forming trench is formed on the bottom surface of the lower substrate 11. By using the photoresist pattern PR8 as an etching mask, a looped trench T is etched through the lower substrate 11. For example, the lower substrate of single crystal silicon is anisotropically etched by deep-RIE (so-called Bosch process) which alternately repeats passivation step using C₄F₈ plasma and etching step using SF₆ plasma. The trench T separates the inner mass body M and the outer support body S.

In the state that the surface of the insulating passivation layer 40 is covered with the sacrificial substrate 99 via the adhesive layer 98, the interlayer insulating film 12 is wet-etched with dilute hydrofluoric acid or buffered hydrofluoric acid. Etchant entered from the trench T etches and removes the intermediate insulating film 12. The sacrificial substrate 99 may be removed before etching. In this case, a resist film or the like is formed on the insulating passivation layer 40. Then, the intermediate insulating film 12 is etched by dilute hydrofluoric acid or buffered hydrofluoric acid. Then, the resist film on surface side is removed. In the state of Fig. 2J, the exposed intermediate insulating film 12 may be etched.

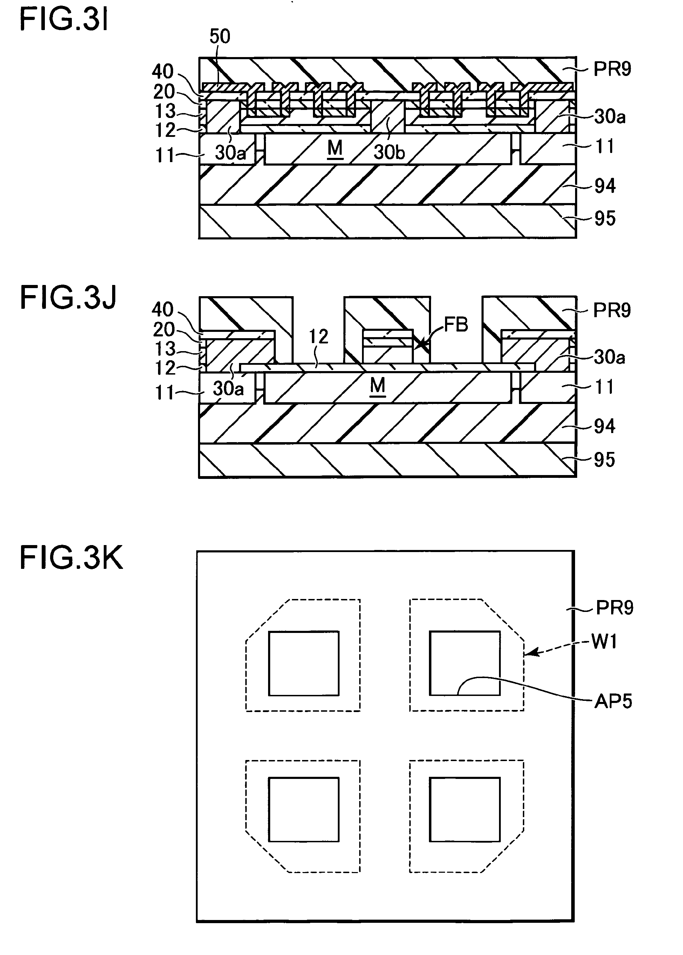

Instead of etching the intermediate insulating layer from the trench in the rear surface, the intermediate insulating layer may be etched from the front surface side or from both the front and rear sides. This alteration process will be described referring to Figs. 3I-3K.
As shown in Figs. 3I and 3J, the support substrate 11 is supported on a sacrificial substrate 95 via adhesive 94, according to necessity, and a photoresist pattern PR9 is formed on the semiconductor layer 13, covering the flexible beam FB. Fig. 3K shows an example of plan shape of the photoresist pattern PR9. The photoresist pattern PR9 has apertures AP5 in the window regions W1 of the semiconductor layer. The intermediate insulating layer is exposed in the apertures AP5. The intermediate insulating layer 12 can be etched from the apertures AP5.
As illustrated in Figs. 2LX and 2L, gaps G1 and G2 are formed between the rise stopper 30a and mass body M and between the flexible beam FB and mass body M, respectively. The gaps G1 and G2 are defined by a thickness of the intermediate insulating layer 12. Post-processes such as dicing and packaging are thereafter executed.

According to the first embodiment described above, motion range of the mass body along a positive z-axis direction can be limited at high precision by the thickness of the intermediate insulating layer 12. Since the intermediate insulating layer 12 can be formed very thin, the motion range of the mass body M along the positive z-axis direction can be made very narrow. The function of limiting the motion range of the mass body along the positive z-axis direction can be realized by the material constituting the connector C2 so that this function can be provided without thickening a package 90, 94. An acceleration sensor can be realized which is thin and has a high impact resistance performance. An area of the mass body M facing the non-contact region of the stopper is limitative so that a sensitivity can be suppressed from being lowered by air dumping more than limiting the motion range of the mass body M by plate components.

The support material is not limited to silicon nitride, provided that it has etching characteristics different from those of the intermediate insulating layer and will not be etched when the intermediate insulating layer is etched. The support material may be other insulating material such as silicon oxynitride, semiconductor such as polysilicon and amorphous silicon, or metal such as copper, nickel, and Ni-Fe alloy. A metal film may be formed by sputtering or plating. Electrolytic plating may be performed by first forming a seed layer by sputtering and then electrolytically plating a metal layer using the seed layer as one electrode. The material of the seed layer may be metal different from that of the plated layer.
The support material layer 30 formed by sputtering, CVD or the like has a conformal surface topology reflecting the underlying topology. The surface of a metal layer formed by electrolytic plating may be planarized by selecting additive to be added to plating liquid.
An etching process for the trench may be executed as the first process of processing the SOI wafer, or may be executed immediately after the insulating protective film 20 is formed.

### Modifications of the first embodiment

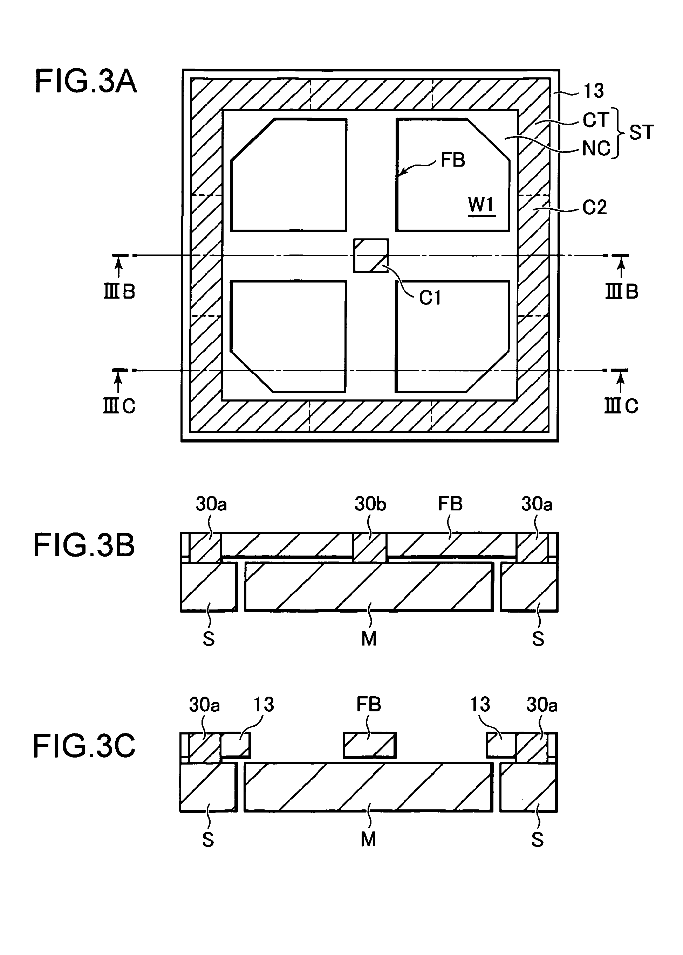

Figs. 3A to 3C illustrate a first modification of the first embodiment. Different points from the first embodiment will be described mainly. Fig. 3A is a plan view, and Figs. 3B and 3C are cross sectional views taken along lines IIIB-IIIB and IIIC-IIIC in Fig. 3A.
As illustrated in Fig. 3A, the non-contact region NC of the stopper, which was made of the support material in the first embodiment, is formed by the upper semiconductor layer 13. In Fig. 3A, a portion of the upper semiconductor layer formed with flexible beam unit FB above the support body extends by widening portions above the corners of the mass body M. From another view point, the upper semiconductor layer has four window regions W1, and the outer corner of the window region W1 is truncated. In the regions where the window region is truncated, the upper semiconductor layer is left and overlaps the corners of the mass body.

As illustrated in Figs. 3B and 3C, the side wall of the support material layer 30a is vertical, and there is no step. The non-contact region NC of the upper semiconductor layer protrudes above the mass body M near at the inner corner of the support material layer 30a, to limit a rise motion of the mass body M. Namely, the upper semiconductor layer 13 extends or protrudes above the mass body M and functions similarly to the non-contact region NC of the support material layer 30a of the first embodiment.

In the modification illustrated in Figs. 3A to 3C, at the etching processes as illustrated in Figs. 2B to 2CX, the insulating protective film 20, upper semiconductor layer 13 and intermediate layer 12 are etched by using one photoresist pattern PR3 illustrated in Fig. 2CP After the support material is buried, the flexible beam unit FB is etched and patterned as illustrated in Figs. 2JX and 2JP In this case, instead of the support material layer 30a, the upper semiconductor layer 13 exists in the truncated region of the window region W1. When the upper semiconductor layer 13 in the window region W1 is removed, the upper semiconductor layer 13 of a rectangular shape is left being coupled to the inner corner of the contact region CT of the stopper ST formed by the support material layer.

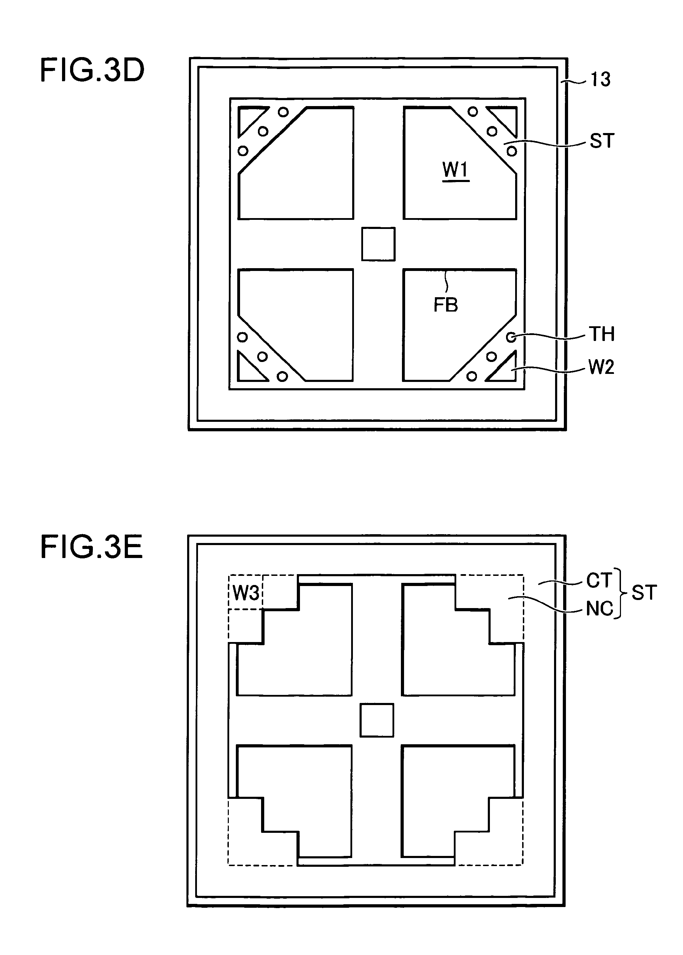

Fig. 3D illustrates a second modification of the first embodiment. Through holes are formed through the rise stopper. The non-contact region NC of the stopper ST formed by the upper semiconductor layer 13 illustrated in Fig. 3A has a stripe shape to form a window W2 in the corner, and through holes TH are formed in the striped non-contact region NC.
It becomes easy to remove the intermediate insulating layer 12 between the non-contact region NC and lower substrate 11. Even if the area where the non-contact region NC faces the mass body M is broadened, it is possible to suppress a defective product forming percentage from being lowered by residues of the intermediate insulating film 12.

Further, even if the area where the non-contact region NX faces the mass body M is broadened, it is possible to suppress a sensitivity from being lowered by air dumping of the non-contact region NC.
The through holes can be formed in the non-contact region, not only in the case when the non-contact region of the stopper is formed by the upper semiconductor layer but also in the case when the non-contact region of the stopper is formed by the connector material.

The shape of the non-contact region of the stopper may be selected from various shapes.
Fig. 3E illustrates a third modification of the first embodiment. The contact region CT of the stopper has a rectangular shape with an aperture formed along the chip outer periphery, similar to the first embodiment. The non-contact region NC projects by a predetermined width from the contact region CT and is coupled with the corner to form an L-shaped region. A window W3 may be formed in the L-shaped region. The rise stopper may be supported by the support body, separated from the upper surface of the mass body M and projects above the mass body M to suppress a rise of the mass body.

Silicon nitride film formed by CVD often applies a tensile stress to a silicon layer. The tensile stress lowers the mobility of carriers (holes) in the p-type silicon region. A piezo resistor is preferably formed in the p-type region because of its characteristics.

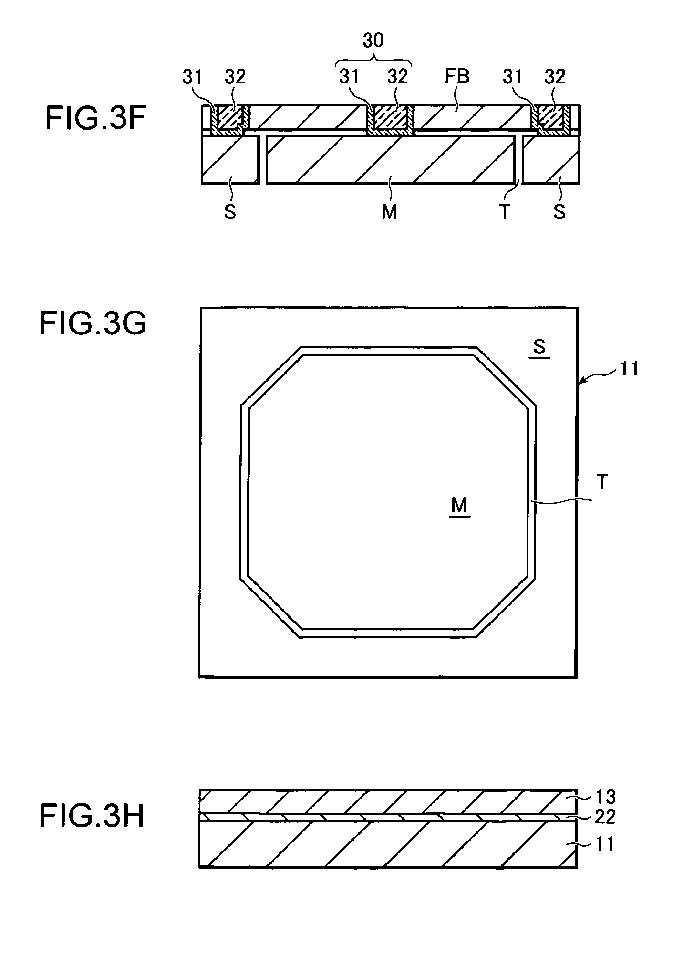

Fig. 3F illustrates a fourth modification of the first embodiment. A support material layer 30 is made of a lamination of a silicon nitride film 31 and a silicon oxide film 32. After the silicon nitride film 31 is formed by CVD, the silicon oxide film 32 is formed by high density plasma (HDP) CVD or the like, and annealing is performed if necessary. Tensile stress generated by the silicon nitride film 31 is cancelled out by compressive stress generated by the silicon oxide film 32, and a compressive stress may be applied to a silicon layer if necessary.

A trench may have a shape other than a rectangle.
Fig. 3G illustrates a fifth modification of the first embodiment. A plan shape of the trench is a truncated rectangular shape with the corners being truncated. Strictly, the mass body M has an octagon plan shape. If the truncated area is small, the shape is approximately a rectangle. If an apex angle is an obtuse angle, it is expected that the mass body M is prevented from being broken by impact.
In the first embodiment, the intermediate insulating film is etched and removed almost completely. Although the intermediate insulating film is left in the chip peripheral portion, it demonstrates no positive function.
Fig. 3H illustrates a sixth modification of the first embodiment. An epitaxial substrate formed by forming a p-type epitaxial layer 22 and an n-type epitaxial layer 13 on an n-type substrate 11 is used in place of the SOI substrate. Electrochemical etching can be utilized which etches a p-type silicon layer and does not etch an n-type silicon layer.
Both the SOI substrate and epitaxial substrate have the lamination substrate structure that a semiconductor layer is laminated via an intermediate layer having different etching characteristics on a lower substrate.

### Second Embodiment

The rise stopper is supported by a support body and extends or projects above the mass body. When a structure is formed which is supported by the mass body and extends or projects above the support body, a fall stopper is realized limiting a displacement amount while the mass body lowers.

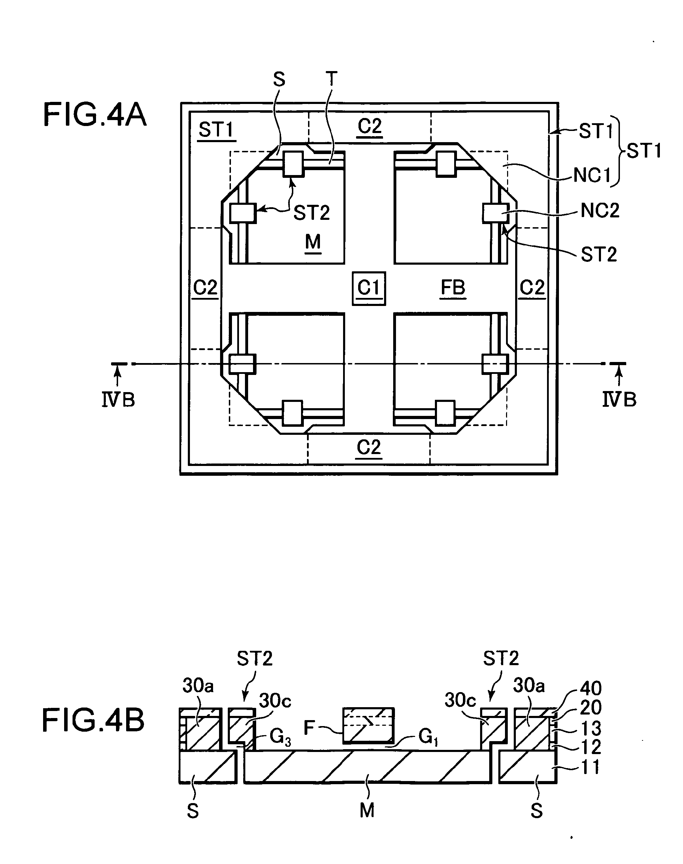

Fig. 4A is a schematic plan view illustrating an acceleration sensor according to the second embodiment, and Fig. 4B is a cross sectional view taken along line IVB-IVB.

As illustrated in Fig. 4A, a lower substrate is separated into a mass body M and a support body S by a trench T. Flexible beam unit FB is formed from an upper semiconductor layer. A connector C1 is formed in the crossed region of the flexible beam unit FB, connectors C2 are formed outside the distal ends of the flexible beam unit FG, and rise stoppers ST1 are formed projecting above the mass body M at the corners of the support body S. These points are similar to the first embodiment. Along each side of the trench T, two fall stoppers ST2 supported by the mass body M and extending or projecting above the support body S are disposed.

As illustrated in Fig. 4B, the fall stopper ST2 is mechanically coupled with the mass body M, is separated by a thickness of the intermediate insulating film above the lower substrate, and extends or projects above the support body S. The fall stopper has a cross sectional structure similar to the rise stopper ST1, and a different point is whether the leg portion is coupled with the support body or the mass body. As the mass body M lowers, the lower stopper ST2 lowers to contact the upper surface of the support body and to limit a fall displacement. As the mass body M rises, the upper surface of the mass body M contacts the rise stopper ST1 to limit a rise displacement. The acceleration sensor formed with the rise stoppers ST1 and fall stoppers ST2 prevents an excessive displacement of motion along both positive and negative vertical directions, and is protected from impact.
The fall stopper 30c is made of the support material layer 30 similar to the rise stopper 30a and the connector 30b. In the modification illustrated in Figs. 3A to 3C, fall stoppers may also be made of a combination of the support material layer and upper semiconductor layer.

The fall stopper 30c can limit a motion range of the mass body along the negative z-axis direction at high precision by a thickness of the intermediate insulating layer 12. Since the intermediate insulating layer 12 can be formed very thin, the motion range of the mass body along the negative z-axis direction can be made extremely narrow. Even if the function of limiting the motion range of the mass body along the negative z-axis direction is added, the package 90, 94 does not become thick.
Although the present invention has been described above in connection with the embodiments, the embodiments are not intended to be limitative. It is obvious for those skilled in the art to make various alterations, improvements, replacements, combinations and the like. For example, the shape of the flexible beam FB can be changed in various ways.
It is obvious to combine various constituent elements illustratively described in the different embodiments and modifications, in as many ways as possible. The materials, sizes, film forming methods, pattern transfer methods and process orders described in the embodiments and modifications are only illustrative. Addition and deletion of processes, and a change in process orders are possible which are obvious for those skilled in the art.

## Claims

1. A MEMS sensor comprising:
a mass body;
a support body surrounding and separated from said mass body by a looped trench, the support body and the mass body being formed from a common substrate;
flexible beam having piezo resistors and formed by a semiconductor layer separated upward from an upper surface of said substrate by a first distance;
first connector extending through a central region of said flexible beam and reaching said mass body, said first connector mechanically coupling said flexible beam and said mass body; and
second connector contacting distal ends of said flexible beam, extending through said semiconductor layer, and reaching said support body, said second connector mechanically coupling said flexible beam and said support body.

2. The MEMS sensor according to claim 1, further comprising first stopper including first contact region extending through said semiconductor layer, reaching said support body, and being mechanically coupled with said support body, and first non-contact region being contiguous with said first contact region, extending above said mass body, and being separated upward from the upper surface of said mass body by said first distance.

3. The MEMS sensor according to claim 2, wherein said mass body has generally a rectangular plan shape, said flexible beam has a cross plan shape, and said first connector extending through a crossed region of said cross plan shape.

4. The MEMS sensor according to claim 3, wherein said first contact region is coupled with said support body at a position outside a corner of said mass body, and said first non-contact region is disposed above said corner of said mass body.

5. The MEMS sensor according to claim 2, wherein said first and second connectors and said first contact region of said first stopper are made of a first material.

6. The MEMS sensor according to claim 5, wherein said first non-contact region of said first stopper is made of said first material.

7. The MEMS sensor according to claim 5, wherein said first non-contact region of said first stopper is formed by said semiconductor layer.

8. The MEMS sensor according to claim 1, further comprising second stopper including a second contact region extending through said semiconductor layer, reaching said mass body, and being mechanically coupled with said mass body, and a second non-contact region being contiguous with said second contact region, extending above said support body, and being separated upward from the upper surface of said support body by said first distance.

9. The MEMS sensor according to claim 8, wherein said first and second connectors and said second contact region of said second stopper are made of a first material.

10. The MEMS sensor according to claim 9, wherein said second non-contact region of said second stopper is made of said first material.

11. The MEMS sensor according to claim 9, wherein said second non-contact region of said second stopper is formed by said semiconductor layer.

12. The MEMS sensor according to claim 2, wherein said first non-contact region includes a through hole.

13. The MEMS sensor according to claim 2, wherein said first and second stoppers and said first stopper are each formed by laminated layers of materials having different etching characteristics and stress polarities.

14. A method for manufacturing a MEMS sensor comprising steps of:
defining a region for a mass body, a region for a trench surrounding said mass body and a region for a support body outside said trench region, on a lamination substrate laminating a semiconductor layer above a substrate via an intermediate layer having etching characteristics different from etching characteristics of said semiconductor layer and said substrate;
etching said semiconductor layer and said intermediate layer in a region of a central area of said mass body region and in a looped region above said support body region to form recesses exposing said substrate;
burying a support material layer having different etching characteristics from those of said intermediate layer, in said recesses;
etching said semiconductor layer to pattern cross-shaped flexible beam unit including said region of the central area in a crossed region, above said mass body region;
etching said trench region of said substrate to form a trench exposing said intermediate layer; and
wet etching said intermediate layer.

15. The method for manufacturing a MEMS sensor according to claim 14, wherein said support material layer in the crossed region of said flexible beam unit couples said mass body and said flexible beam unit, and said support material layer outside distal ends of said flexible beam unit couples said flexible beam unit and said support body.

16. The method for manufacturing a MEMS sensor according to claim 14, wherein said intermediate layer includes silicon oxide, and said wet etching uses dilute hydrofluoric acid or buffered hydrofluoric acid.

17. The method for manufacturing a MEMS sensor according to claim 16, wherein during said wet etching, a surface of said semiconductor layer is covered with a mask.

18. The method for manufacturing a MEMS sensor according to claim 14, wherein when said semiconductor layer and said intermediate layer are etched, said semiconductor layer is etched and said intermediate layer is left in a region extending above said mass body, or when said cross-shaped flexible beam unit is patterned, said semiconductor layer is left in the region extending above said mass body.

19. The method for manufacturing a MEMS sensor according to claim 14, wherein when said semiconductor layer and said intermediate layer are etched, said semiconductor layer is etched in a region extending from said mass body to said support body, and said intermediate layer is etched in a region extending above said mass body.

20. The method for manufacturing a MEMS sensor according to claim 14, wherein said support material layer is a lamination layer of a silicon nitride layer and a silicon oxide layer.
